# EUROPEAN PATENT APPLICATION

(11) **EP 1 471 718 A1**
(43) Date of publication of application: **27.10.2004**
(21) Application number: 03291014.3
(22) Date of filing: 24.04.2003
(51) Int. Cl.: H04M 3/42, H04M 1/247, H04L 29/06, H04Q 3/00

(54) **Method for providing legacy and new services for a telecommunication terminal connected to a private branch exchange**

(71) Applicant: ALCATEL, 75008 Paris (FR)
(72) Inventor: Pfleger, Nicolas, 67000 Strasbourg (FR)
(74) Representative: Brose, Gerhard

(57) **Abstract**

A method for providing a service for a telecommunication terminal connected to a telecommunication system or telecommunication service provider, comprising the steps of
- running an adapted application on said telecommunication system or said telecommunication service provider, wherein said service is supported
- supplying said service either in a first of several different communication protocols, or in a second protocol out said several different communication protocols accessed through said first protocol,
- allowing said telecommunication terminal to process all of said different protocols
- using only one of said protocols in said terminal according to some predefined criteria managed by said system.

## Description

The present invention relates to the field of telecommunications and move particularly to services provided to telecommunications terminals by a system or systems they are connected to.

More specifically, this invention deals with problems which arise when there is a change or an update in protocols, or when only some services are reconfigured or redefined based on a newer protocol, whereas the other services remain in the original or old protocol.

The general aim of the present invention is to propose a solution to give access to services only supported by a former or old protocol through features (communication, display, feedback action) built on the basis of a new or more recent protocol.

Indeed, thanks to such a new protocol, services can for example be presented on business terminals with enhanced ergonomics not possible with the old protocol.

Also, due to limited software development resources, not all services for terminals are redesigned with said new protocol. Only the services the more frequently used are redesigned, for reasons of costs effectiveness.

Thus a service not supported by the new protocol can not be activated from the terminal when this latter is operated with the old protocol. The information to activate such service needs to be sent over the old protocol from the terminal to the system.

In particular, the present invention intends to deal with the problems resulting from the change of protocols in relation to operation of enhanced private branch exchanges (PBX) services on connected terminals, especially on business terminals.

Nowadays, current PXB services are presented on terminals on a text mode for rendering. This kind of rendering is seen today as not efficient and old-fashioned.

New ranges of terminals, which are under design or already proposed, provide a more easy-to-use and ergonomic rendering for existing services. This results into a new way (and protocol) for the systems to control these terminals, as this new protocol manipulates graphical objects of the terminal's user interface.

Due to limited software development resources, it is normally not possible to deliver the whole set of services through the new protocol with the initial release of the new type of systems.

A known solution for such multi-protocol environment consists in methods for interworking of IP telephony protocols which have already been proposed.

Such known methods use interworking agents for providing functions usable by the protocol agents of the various concerned protocols, an interworking agent being associated to each one of said protocols.

Nevertheless, the resulting structure is cumbersome, does still need large software development resources and does not allow a progressive migration from an older, less efficient and/or less user-friendly protocol to a newer one, with enhanced properties.

It is therefore an aim of the present invention to provide a solution enabling a terminal to access services supported by different protocols, especially to access through a newer protocol services supported by an older protocol, by needing only limited software development and allowing progressive and/or partial migration from said older to said newer protocol.

To that end, the present invention mainly concerns a method for providing a service for a telecommunication terminal connected to a system or a similar service provider running an adapted application, wherein said service is supported and can be supplied in either one of several different communication protocols, or in at least two of said protocols, one of these protocols being a prefered protocol, and wherein said telecommunications terminal is provided with means allowing it to process all said different protocols, said terminal using only one of said protocols according to some predefined criteria managed by said system.

According to a feature of the invention, the telecommunications terminal comprises means to support all different protocols in real-time and the protocol to be used by the terminal to notify and operate a given service is defined by the system by controlling a protocol switching means provided on or in said terminal.

Preferably, each service is supported and can be supplied in at least one of two possible protocols, one of them less recent (OLD) and the other more recent (NEW), the more recent one being the prefered protocol providing enhanced display ergonomics on the terminal.

Thus, with the invention, a solution was found to allow mixing in real time into the terminals services controlled through the old protocol with services controlled through the new protocol. Services can then be progressively ported from the old technology to the new one. Customers will however have access to all services, even since the first release, although only some of these services are operated into the new enhanced ergonomics.

Advantageously, the inventive method can provide that the protocol supporting means build a virtual rendering of each protocol flow, only one of them being actually presented to the user on the display means of the concerned terminal according to the state of the protocol switching means controlled by the system.

In relation to a first embodiment of the invention, when the user of the concerned terminal requests a service that has been designed or redesigned with the prefered protocol, the system orders the concerned terminal to present the service to the user and operate it through said prefered protocol. Alternatively, when the user requests a service that is not available or has not been redesigned with said prefered protocol, the system orders the terminal to present the service to the user and operate it through the protocol supporting said service, different from said prefered protocol.

In accordance with a most prefered embodiment of the invention, each service is notified to the terminal in the prefered protocol whether said service is or not supported by said prefered protocol.

In order to manage seamlessly the return instructions for a given service whichever protocol it is built on, a cross protocol handling means is provided in the concerned terminal, which means, for a service notified in the prefered protocol, simply returns to the system, in said protocol, the valuable content of the notification message and, for a service notified in an other protocol, analyses the valuable content of the notification message, builds up a message or sequence of messages in the concerned other protocol and returns the latter to the system.

In relation with the multi-protocol environment referred to before, the notification of a service to the terminal can advantageously be carried out by means of a corresponding interactive object more specifically an interactive user interface object, controlled through the prefered protocol and configured to notify user actions back to the system through said prefered protocol or any other of the possible protocols.

Preferably, the notification message of each service to the terminal comprises at least the name of the service, the activation message or action for said service, forming the valuable content and the basis of the information displayed on the display means of the terminal, and the identity of the protocol supporting said service.

The invention will now be described in more details, by way of example, in relation to non limitative embodiments shown on the enclosed drawings, wherein :
Fig 1 is a synoptic and schematic view of a terminal and a system according to a first embodiment of the invention ;
Fig 2 is a synoptic and schematic view of a terminal and system according to a second embodiment of the invention, and,
Fig 3 is a schematic diagram of an example of messages exchanged between a system and a terminal for carrying out specific services supported by two different protocols.

As indicated before, the invention mainly concerns a method as described herein before.

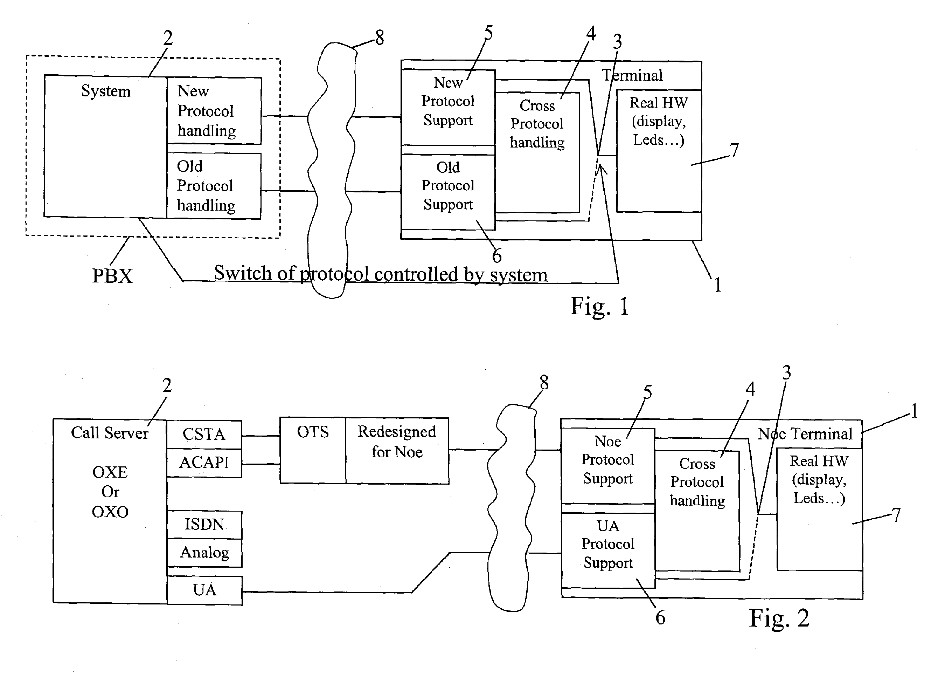

The invention also concerns, as shown on the enclosed figures 1 and 2, a private branch exchange (PBX) or similar device able to perform, in association with adapted telecommunications terminals 1, said aforementioned method.

Such a PBX or similar device comprises a system 2 running applications able to provide services for a telecommunications terminal 1 connected to that system, wherein said services are supported and can be supplied in either one of several different communication protocols, or in at least two of said protocols, one of these protocols being a prefered protocol, and wherein each of said connected telecommunications terminal 1 is provided with means 3, 4, 5, 6 allowing it to process all of said different both protocols, said terminals 1 using only one of said protocols according to some predefined criteria managed by said system 2.

Furthermore, the invention also encompasses a telecommunication terminal 1 able to be connected to a system 2, possibly through a network 8, for example to a system 2 comprised in a private branch exchange or a similar device as mentioned before. Said system 2 runs at least an application able to provide services for a telecommunications terminal 1 connected to it, wherein said terminal comprises a protocol handling means 4 able to process different protocols and a protocol switching means 3 controlled directly by the system 2, said switching means 3 being operated to define which of the protocols is used to operate each of said services.

Preferably, said provided protocol handling means 4 is a cross protocol handling means which, for a service notified in the prefered protocol, simply returns to the system 2, in said protocol, the content of the notification message and, for a service notified in an other protocol, analyses the content of the notification message, builds up a message or sequence of messages in the concerned other protocol and returns the latter to the system 2, once said service has been activated by the user of the concerned terminal 1.

As shown in figure 1 by way of example, the system 2 comprises or is associated with a protocol handling means for each type of protocol supporting services and the terminal 1 also comprises, in addition to the switching means 3, the cross protocol handling means 4 and the display means 7, protocol supports 5, 6 for the different protocols.

The invention will now be described in relation with a practical embodiment wherein only two different protocols are considered, namely a NEW protocol corresponding to the prefered protocol and an OLD protocol.

As indicated before, the notification of a service to the terminal 1 is carried but by means of a corresponding interactive object.

These so called Terminal's Interactive User Interface objects - that are controlled through the NEW protocol - can be configured to notify user actions through the NEW protocol or through the OLD protocol thanks to the means 4 mentioned before.

For an action notified through the NEW protocol, the handling means 4 simply returns in NEW protocol the value specified into the message used to display the interactive object on the screen 7. The means 4 does not interpret this return-value.

For an action notified through the protocol, the handling means 4 analyses the return-value specified for that interactive object and builds the OLD protocol messages accordingly. In such a case, the return-value contains data allowing simple and systematic mapping to OLD protocol messages and parameters. It is then up to the application running on the system 2 and that created such an interactive object to provide messages required to activate the targeted service. Such application is also in charge to specify which return mode must be applied (OLD or NEW).

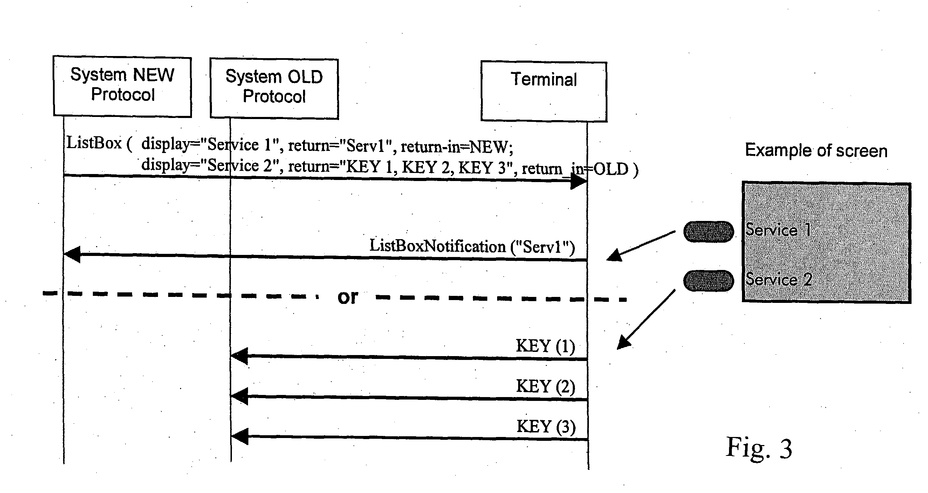

Figure 3 illustrates an example of a display built by the NEW protocol that gives access to two services (1 and 2). Service 1 is supported by the NEW protocol while the Service 2 is only supported by the OLD protocol. To activate the service 2, the dialling "123" must be sent to the system 2.

Service 2 is then activated in the system 2 because the terminal has generated the correct sequence of the OLD protocol messages required for that. This list of messages was given into the "ListBox" object controlled by the NEW protocol. The benefit is that both Service 1 and Service 2 were displayed on the display means 7 of the terminal 1 thanks to the enhanced ergonomics provided by the NEW protocol, although Service 2 activation is performed in OLD protocol.

Figure 2 illustrates, in a mainly self-explanatory way, a second embodiment of the invention, very similar to the one shown on figure 1 and implemented into applicant's so called "Noe" architecture.

On this figure, the following items are shown:
- OXO: OmniPCX Office,
- OXE: OmniPCX Entreprise,
- CSTA: CTI Interface to export telephony information to Applicative platform
- ACAPI: System Configuration interface,
- OTS: Open Telephony Server, application providing telephony services based on CSTA and ACAPI,
- ISDN: Interface to connect ISDN devices,
- Analog: Interface to connect Analog phones,
- UA: Interface to connect Alcatel's Reflexees phone range,
- Redesigned Services For Noe: New application that presents a limited set of telephonic and non-telephonic services to new Noe terminal range.

Thanks to the Cross-Protocol Handling module 4 in the Noe terminals 1, actions performed on Noe protocol user interface objects can be reported through UA protocol.

In this embodiment, the UA protocol is the OLD protocol supporting all telephony services. The Noe protocol is the new protocol to provide enhanced ergonomics. The switch of context between UA and Noe Protocol into the terminal is controlled through the Noe protocol itself.

Noe terminals are designed to handle services coming from different sources via different protocols: the new Noe protocol and the UA protocol. The source supplying the new Noe protocol is in charge to tell the terminal 1 which source must be currently visible on screen.

The "Telephony" is one source and provides telephony services. The "Applications" is another source and provides applicative services. The Applications source provides the idle screen management from which any services can be launched (either supplied by the Telephony or the Applications).

From a given terminal 1 point of view, two flows of commands are received concurrently, one from the Telephony in UA protocol and the other from the Applications in Noe protocol. The terminal has however only one display and one keyboard. Therefore, it cannot display both simultaneously. It will then display either the screens coming from the Telephony or the screens coming from the Applications. The decision to display one or another is left to the Applications side. It can control it thanks to a specific command from the Noe protocol (Switch handling).

To properly handle these two flows, Noe terminals have implemented different contexts or protocol supports:
- One is dedicated to the UA protocol commands coming from the Telephony.
- An other is dedicated to the Noe protocol commands coming from the Applications.

Each of these contexts handles a virtual Noe terminal. Every command received is processed but has no physical counterpart (no action on the physical terminal). A mechanism is implemented into the terminal 1 to feed the physical terminal with either the Telephony Context or the Applications Context, this mechanism being the switching means 3.

The present invention is, of course, not limited to the preferred embodiment described and represented herein, changes can be made or equivalents used without departing from the scope of the invention.

## Claims

1. Method for providing a service for a telecommunication terminal connected to a system or a similar service provider running an adapted application, wherein said service is supported and can be supplied in either one of several different communication protocols, or in at least two of said protocols, one of these protocols being a prefered protocol, and wherein said telecommunications terminal (1) is provided with means (3, 4, 5, 6) allowing it to process all of said different protocols, said terminal (1) using only one of said protocols according to some predefined criteria managed by said system (2).

2. Method according to claim 1, **characterised in that** the concerned telecommunications terminal (1) comprises means (5, 6) to support all different protocols in real-time and **in that** the protocol to be used by the terminal (1) to notify to the user and operate a given service is defined by the system (2) by controlling a protocol switching means (3) provided on or in said terminal (1).

3. Method according to claim 2, **characterised in that** the protocol supporting means (5, 6) build a virtual rendering of each protocol flow, only one of them being actually presented to the user on the display means (7) of the concerned terminal (1) according to the state of the protocol switching means (3) controlled by the system (2).

4. Method according to anyone of claims 1 to 3, **characterised in that**, when the user of the concerned terminal (1) requests a service that has been designed or redesigned with the prefered protocol, the system (2) orders the concerned terminal (1) to present the service to the user and operate it through said prefered protocol and **in that**, when the user requests a service that is not available or has not been redesigned with said prefered protocol, the system (2) orders the terminal (1) to present the service to the user and operate it through the protocol supporting said service, different from said prefered protocol.

5. Method according to claim 1 to 3, **characterised in that** each service is notified to the terminal (1) in the prefered protocol whether said service is or not supported by said prefered protocol and **in that** a cross protocol handling means (4) is provided in the concerned terminal (1), which means (4), for a service notified in the prefered protocol, simply returns to the system (2), in said protocol, the valuable content of the notification message and, for a service notified in an other protocol, analyses the valuable content of the notification message, builds up a message or sequence of messages in the concerned other protocol and returns the latter to the system (2).

6. Method according to claim 5, **characterised in that** the notification of a service to the terminal (1) is carried out by means of a corresponding interactive object, more specifically an interactive user interface object, controlled through the prefered protocol and configured to notify user actions back to the system (2) through said prefered protocol or any other of the possible protocols.

7. Method according to claim 5 or 6, **characterised in that** the notification message of each service to the terminal (1) comprises at least the name of the service, the activation message or action for said service, forming the valuable content and the basis of the information displayed on the display means (7) of the terminal (1), and the identity of the protocol supporting said service.

8. Method according to anyone of claims 1 to 7, **characterised in that** the prefered protocol provides enhanced display ergonomics on the terminal (1).

9. Method according to anyone of claims 1 to 8, **characterised in that** each service is supported and can be supplied in at least one of two possible protocols, one of them less recent (OLD) and the other more recent (NEW), the more recent one being the prefered protocol.

10. Private branch exchange or similar device comprising a system (2) running an application able to provide services for a telecommunications terminal (1) connected to that system, wherein said services are supported and can be supplied in either one of several different communication protocols, or in at least two of said protocols, one of these protocols being a prefered protocol, and wherein said connected telecommunications terminal (1) is provided with means (3, 4, 5, 6) allowing it to process all said different protocols, said terminal (1) using only one of said protocols according to some predefined criteria managed by said system (2).

11. Private branch exchange according to claim 8, **characterised in that** it is adapted to perform a method according to any one of the claims 2 to 9.

12. Telecommunications terminal (1) able to be connected to a system (2), possibly through a network (8), for example to a system comprised in a private branch exchange or a similar device according to claim 10 or 11, said system running an application able to provide services for a telecommunications terminal (1) connected to it, wherein said terminal comprises a protocol handling means (4) able to process different protocols and a protocol switching means (3) controlled directly by the system (2), said switching means (3) being operated to define which of the protocols is used to operate each of said services.

13. Telecommunications terminal according to claim 12, **characterised in that** said provided protocol handling means (4) is a cross protocol handling means which, for a service notified in the prefered protocol, simply returns to the system (2), in said protocol, the content of the notification message and, for a service notified in an other protocol, analyses the content of the notification message, builds up a message or sequence of messages in the concerned other protocol and returns the latter to the system (2), once said service has been activated by the user of the concerned terminal (1).

14. Telecommunication terminal according to claim 12 or 13, **characterised in that** it is adapted to perform the method according to anyone of claims 1 to 9 in connection with a private branch exchange according to claim 10 or 11.
